# EUROPEAN PATENT APPLICATION

(11) **EP 4 822 766 A1**
(43) Date of publication of application: **14.10.2026**
(21) Application number: 24901022.4
(22) Date of filing: 03.12.2024
(51) Int. Cl.: H01M 4/36, H01M 4/62, H01M 4/48, H01M 4/38, H01M 4/587, H01M 10/052, C01B 33/021, C01B 32/00, H01M 4/02

(54) **NEGATIVE ELECTRODE MATERIAL OF LITHIUM SECONDARY BATTERY, AND MANUFACTURING METHOD THEREFOR**

(30) Priority: 05.12.2023 KR 20230174124
(71) Applicant: POSCO Holdings Inc., Pohang-si, Gyeongsangbuk-do 37859 (KR)
(72) Inventor: WOO, Jung-Gyu, Pohang-si, Gyeongsangbuk-do 37877 (KR); YOU, Seung-Jae, Pohang-si, Gyeongsangbuk-do 37877 (KR); KIM, Dae-Hyun, Pohang-si, Gyeongsangbuk-do 37877 (KR); JO, Hyun-Chul, Pohang-si, Gyeongsangbuk-do 37877 (KR)
(74) Representative: Pfenning, Meinig & Partner mbB
(86) International application number: PCT/KR2024/019572
(87) International publication number: WO 2025/121836

(57) **Abstract**

One aspect of the present invention provides a negative electrode material for a lithium secondary battery and a manufacturing method therefor, wherein the negative electrode material includes nano-sized first silicon particles and micro-sized second silicon particles surrounded by a carbon coating layer, thereby securing high capacity characteristics and excellent lifespan characteristics.

## Description

### Technical Field

The present disclosure relates to a negative electrode material of a lithium secondary battery and a manufacturing method therefor.

### Background Art

A lithium secondary battery is a secondary battery that is generally comprised of a positive electrode including a positive electrode material, a negative electrode including a negative electrode material, a separator, and an electrolyte, and performs charging and discharging by intercalation and deintercalation of lithium ions. The lithium secondary battery has advantages of high energy density, high electromotive force, and high capacity, and has been applied to devices within various fields, such as mobile devices, electric vehicles, and hybrid electric vehicles.

As the positive electrode material constituting the positive electrode of the lithium secondary battery, metal oxides such as LiCoO₂, LiMnO₂, LiMn₂O₄ or LiCrO₂ are used, and as the negative electrode material constituting the negative electrode, metal lithium, carbon-based materials such as graphite or activated carbon, and metal-based materials such as silicon oxide (SiOₓ) are used.

As the carbon-based negative electrode material, various types of materials are used, including crystalline carbon-based materials such as natural graphite and artificial graphite, and amorphous carbon-based materials such as hard carbon and soft carbon. Thereamong, graphite-based negative electrode materials are most widely used due to their excellent reversibility, which is advantageous for cycle life characteristics of lithium secondary batteries.

However, graphite-based negative electrode materials have a relatively low theoretical capacity (for example, about 372 mAh/g in the case of a LiC₆ negative electrode), and thus remain insufficient to satisfy electrochemical characteristics required in the relevant market.

Accordingly, many researchers have focused on Group IV elements (Si, Ge, Sn) in the periodic table, and thereamong, silicon, in particular, is attracting attention as a very attractive material due to its very high theoretical capacity (Li₁₅Si₄ : 3600 mAh/g) and low operating voltage (~0.1V vs Li/Li+). However, during the charging and discharging, silicon undergoes significant volume expansion and contraction due to reaction with lithium, which may cause pulverization of silicon active material powder and deterioration of electrical contact between the silicon active material and a current collector. Due to such phenomena, lithium secondary batteries including silicon may suffer from rapid capacity degradation as charge-discharge cycles progress.

### Summary of Invention

### Technical Problem

An aspect of the present disclosure is to provide a negative electrode material of a lithium secondary battery capable of achieving high capacity characteristics and excellent lifespan characteristics, and a manufacturing method therefor.

The technical problems of the present disclosure are not limited to the above description. Those skilled in the art to which the present disclosure pertains will have no difficulty in understanding additional technical problems of the present disclosure from the general contents of the present specification.

### Solution to Problem

According to an aspect of the present disclosure, a negative electrode material of a lithium secondary battery includes first silicon particles with a particle size of less than 1.00 µm; second silicon particles with a particle size of 1.00 µm or more; and a carbon coating layer surrounding the first silicon particles, in which a D90 particle size of the second silicon particles is 5.00 µm or more and 15.0 µm or less.

The carbon coating layer may be soft carbon, and the soft carbon may be derived from at least one of coal-based pitch and petroleum-based pitch.

the coal-based pitch may have a fixed carbon ratio of 60% or more and a beta-resin value (β-resin value) of 10% or more.

The D90 particle size of the first silicon particles may be 30 nm or more and 500 nm or less.

A weight ratio of the second silicon particle may be 10 wt% or more and 80 wt% or less based on a total weight of the first silicon particles and the second silicon particles.

In the negative electrode material of a lithium secondary battery described above, a relative particle size ratio derived by the following Equation 1 may be 0.20 or more and 0.99 or less. 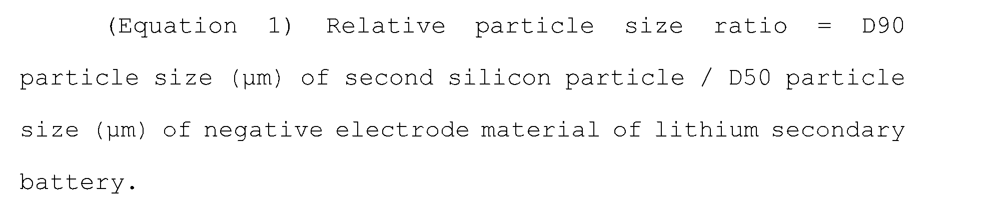Relative particle size ratio = D90 particle size (µm) of second silicon particle / D50 particle size (µm) of negative electrode material of lithium secondary battery. (Equation 1)

A full width at half maximum of a particle size distribution of the first silicon particle may be 0.2 or more.

The negative electrode material of a lithium secondary battery described above may further include a conductive material, and the conductive material may be at least one of natural graphite and artificial graphite.

In the negative electrode material of a lithium secondary battery described above, a median particle size D50 may be 8.0 µm or more and 15.0 µm or less.

According to another aspect of the present disclosure, a manufacturing method for a negative electrode material of a lithium secondary battery includes preparing first silicon particles with a particle size of less than 1.00 µm and second silicon particles with a particle size of 1.00 µm or more; mixing the first silicon particles, the second silicon particles, and pitch to obtain a precursor; press molding the precursor; carbonizing the precursor after the press molding to obtain a molded body; and grinding and classifying the molded body, in which a D90 particle size of the second silicon particles is 5.00 µm or more and 15.0 µm or less.

According to still another aspect of the present disclosure, a manufacturing method for a negative electrode material of a lithium secondary battery includes: preparing first silicon particles with a particle size of less than 1.00 µm; carbon coating the first silicon particles; after carbon coating, adding second silicon particles with a particle size of 1.00 µm or more and a carbon-based material to the first silicon particles, followed by mixing to obtain a mixture; after the mixing, heat treating the mixture to obtain a molded body; and grinding and classifying the molded body, in which a D90 particle size of the second silicon particles is 5.00 µm or more and 15.0 µm or less.

In the manufacturing method for a negative electrode material of a lithium secondary battery described above, a weight ratio of the second silicon particle may be 10 wt% or more and 80 wt% or less based on a total weight of the first silicon particles and the second silicon particles.

A conductive material may be additionally mixed during the mixing, and the conductive material may be at least one of natural graphite and artificial graphite.

The preparing of the first silicon particles may include obtaining first silicon by grinding a silicon raw material through mechanical milling.

A solvent in the mechanical milling may be ethanol or IPA.

The mixing may be performed through a milling process via a contact medium with powder.

The manufacturing method for a negative electrode material of lithium secondary battery described above may further include carbon coating a surface of the manufactured negative electrode material.

### Advantageous Effects of Invention

According to an aspect of the present disclosure, by providing a negative electrode material of a lithium secondary battery including first silicon particles and second silicon particles surrounded by a carbon coating layer, it is possible to secure high capacity characteristics and excellent lifespan characteristics.

More specifically, according to another aspect of the present disclosure, the negative electrode material includes nano-sized first silicon particles within the carbon coating layer, thereby achieving excellent cycle characteristics, and at the same time, the negative electrode material additionally includes micro-sized second silicon particles, thereby securing high capacity characteristics.

### Brief Description of Drawings

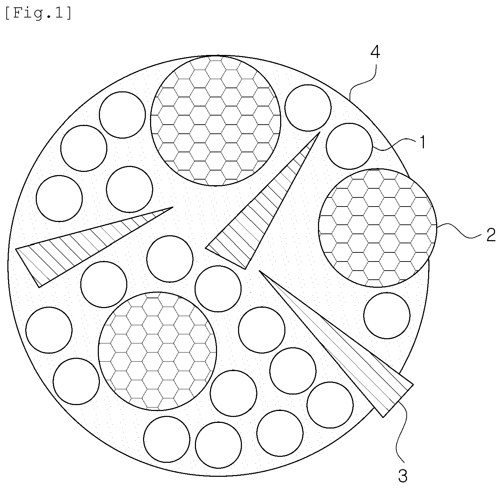

FIG. 1 is a diagram schematically illustrating a negative electrode material of a lithium secondary battery according to an embodiment of the present disclosure.

### Best Mode for Invention

Hereinafter, exemplary embodiments of the present disclosure will be described. However, exemplary embodiments in the present disclosure may be modified in several other forms, and the scope of the present disclosure is not limited to exemplary embodiments to be described below.

In this specification, the term "including" is used to indicate the inclusion of other components, rather than excluding other components, unless specifically stated otherwise.

In addition, unless otherwise specified in the present specification, the unit '%' means weight%.

While not essential, it should be noted that the technical solutions for each aspect of the present disclosure can also be usefully applied to other aspects of the present disclosure. In addition, the composition and various useful parameters according to each aspect of the present disclosure may be appropriately combined with other aspects to obtain advantageous effects.

Since silicon undergoes significant volume expansion and contraction due to reactions with lithium during charging and discharging, lithium secondary batteries containing silicon have a problem in that their capacity may rapidly decrease as charge-discharge cycles progress.

To solve the above-described problem, the inventors of the present disclosure discovered that protecting nano-sized first silicon particles with a carbon coating layer not only prevents adverse reactions between the first silicon particles and the electrolyte solution but also maintains contact between the first silicon particles and the conductive material despite the expansion and contraction of the silicon, thereby improving the lifespan characteristics of the negative electrode material.

However, when the negative electrode material is comprised solely of such nano-sized silicon particles, the initial efficiency of the negative electrode material tends to decrease as the reversibility of lithium ions during charging and discharging is reduced.

Therefore, the inventors of the present disclosure also discovered that the negative electrode material includes nano-sized first silicon particles while simultaneously including micro-sized second silicon particles, thereby securing both high capacity characteristics and excellent lifespan characteristics of the negative electrode material.

In this regard, according to an aspect of the present disclosure, a negative electrode material of a lithium secondary battery includes first silicon particles with a particle size of less than 1.00 µm; second silicon particles with a particle size of 1.00 µm or more; and a carbon coating layer surrounding the first silicon particles, in which a D90 particle size of the second silicon particles is 5.00 µm or more and 15.0 µm or less.

In this specification, D90 and D50 refer to particle sizes corresponding to 90% and 50% of the volume cumulative of the particle size distribution, respectively.

Hereafter, each component is described in detail.

### First Silicon Particles

As described above, an embodiment of the present disclosure may include nano-sized first silicon particles to prevent the degradation of lifespan characteristics of the negative electrode material due to the volume expansion of silicon caused by repeated charging and discharging. That is, the particle size of the first silicon particles may be less than 1.00 µm. More specifically, for the same purpose as described above, the D90 particle size of the first silicon particles may be 500 nm or less, and according to another embodiment, may be 300 nm or less. On the other hand, to prevent the deterioration of initial electrochemical efficiency due to the D90 particle size of the first silicon particles of the present disclosure being excessively small, according to an embodiment of the present disclosure, a lower limit of the D90 particle size of the first silicon particles may be set to 30 nm. According to another embodiment, the lower limit of the D90 particle size of the first silicon particles may be 200 nm.

In addition, in one example of the present disclosure, a full width at half maximum of the particle size distribution of the first silicon particles may be 0.2 or more. As a result, it is possible to secure the excellent lifespan characteristics and expansion characteristics of the negative electrode material.

### Carbon Coating Layer

To suppress the volume expansion of the first silicon particles, the negative electrode material of a lithium secondary battery according to an embodiment of the present disclosure may include a carbon coating layer surrounding the first silicon particles.

As described above, according to an embodiment of the present disclosure, it is possible to prevent unnecessary side reactions by minimizing a contact area between the first silicon particles and an electrolyte solution through the carbon coating layer. Furthermore, according to an embodiment of the present disclosure, when the negative electrode material additionally includes a conductive material such as graphite, the contact between the silicon particles and the conductive material may be maintained despite the expansion and contraction of the first silicon particles, thereby securing the excellent conductivity of the negative electrode material.

In addition, as one example, the carbon coating layer may be soft carbon.

In this case, the soft carbon is a carbon-based material having a nearly graphitized layered crystal structure, in which hexagonal honeycomb planes are arranged in layers, and refers to a carbon-based material that is transformed into a graphite structure when heat-treated at a temperature of 2500°C or higher. Although the soft carbon is not specifically limited, examples thereof include petroleum coke, coal coke, mesocarbon spheres, etc.

In particular, according to an embodiment of the present disclosure, the soft carbon may be derived from at least one of coal-based pitch and petroleum-based pitch. The expression "derived from at least one of the coal-based pitch and the petroleum-based pitch" may mean that at least one of the coal-based pitch and the petroleum-based pitch has been carbonized.

The coal-based pitch and the petroleum-based pitch may also function as a binder that stably supports the structure of the negative electrode material. That is, the coal-based pitch and the petroleum-based pitch are dispersed and positioned between pores of the porous silicon-carbon composite, and thus, the porous structure of the silicon-carbon composite may be prevented from collapsing even if the charge-discharge cycles are repeated when the negative electrode material according to the present embodiment is applied to a battery.

Meanwhile, as one example, the fixed carbon ratio of the coal-based pitch may be 60% or more. More specifically, the fixed carbon ratio may be 70% or more.

As the fixed carbon value of the coal-based pitch increases, it may induce an increase in capacity and efficiency by generating conductive paths with silicon particles that have low intrinsic conductivity. Additionally, when the fixed carbon value satisfies the above range, the internal pores of the negative electrode material of the present embodiment may be reduced. Accordingly, side reactions with the electrolyte solution may also be reduced, thus contributing to the increase in the initial efficiency of the battery.

A beta-resin value (β-resin value) of the coal-based pitch may be, for example, 10% or more, and more specifically, the beta-resin value may be 25% or more.

Specifically, the beta resin (β-resin) value refers to a value obtained by subtracting the quinoline-insoluble content from the benzene-insoluble content. This beta-resin value is proportional to the binding property. In the present embodiment, since the coal-based pitch includes the beta resin (β-resin) value satisfying the above range, the porous structure of the silicon-carbon composite may be maintained more stably. Accordingly, when the negative electrode material according to the present embodiment is adopted, the lithium secondary battery having excellent lifespan characteristics and electrode expansion characteristics may be realized.

### Second Silicon Particles

As described above, an embodiment of the present disclosure may include second silicon particles with a particle size of 1.00 µm or more, together with the first silicon particles.

In addition, as a non-limiting example, the D90 particle size of the second silicon particles may be 5.00 µm or more and 15.0 µm or less.

Specifically, the micron-sized second silicon particles may improve the reversibility of lithium ions during the charging and discharging, thereby increasing the capacity of the negative electrode material. As one example, the D90 particle size of the second silicon particles may be 5.00 µm or more. According to another embodiment, the D90 particle size of the second silicon particles may be 7.00 µm or more. Thus, the reason why an embodiment of the present disclosure limits the D90 particle size rather than the D50 particle size to the above range is that, by limiting the D90 particle size of the second silicon particles, the second silicon particles may be stably incorporated into a negative electrode material precursor. To achieve the above-described object, an embodiment of the present disclosure may have the D90 particle size of the second silicon particles of 15.0 µm or less. According to another embodiment, the D90 particle size of the second silicon particles may be 14.0 µm or less, and according to another embodiment, may be 13.5 µm or less.

In addition, the second silicon particles may be a product in which the full width at half maximum of the particle size distribution is less than 0.2°, which is to ensure high-capacity characteristics of the negative electrode material by including the second silicon particles having the full width at half maximum of less than a predetermined level.

Meanwhile, as one example, the weight ratio of the second silicon particles may be 10 wt% or more and 80 wt% or less based on the total weight of the first silicon particles and the second silicon particles.

That is, in order to secure high capacity characteristics as described above, the negative electrode material according to an embodiment of the present disclosure may include the second silicon particles of 10 wt% or more based on the total weight of the first silicon particles and the second silicon particles. More specifically, the negative electrode material may include 25 wt% or 50 wt% or more. However, when the second silicon particles in the negative electrode material become excessively abundant, the relative amount of the first silicon particles described above may decrease, which may lead to the deterioration in the lifespan characteristics of the negative electrode material. To prevent this, an embodiment of the present disclosure may set the weight ratio of the second silicon to the total weight of the first silicon particles and the second silicon particles to 80 wt% or less. More specifically, the weight ratio may include 78 wt% or less or 60 wt% or less.

In addition, according to an embodiment of the present disclosure, the relative particle size ratio derived by the following Equation 1 may be 0.20 or more and 0.99 or less. 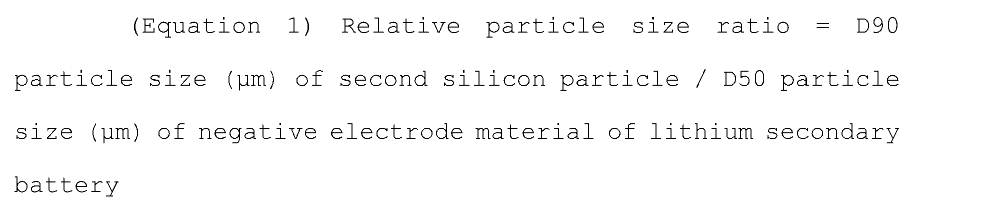 Relative particle size ratio = D90 particle size (µm) of second silicon particle / D50 particle size (µm) of negative electrode material of lithium secondary battery (Equation 1)

That is, in one example of the present disclosure, the relative particle size ratio value derived by Equation 1 may be set to 0.99 or less to facilitate particle size control of the negative electrode material of a lithium secondary battery and to improve the cycle characteristics of the negative electrode material. As a result, when the relative particle size ratio exceeds 0.99, the reason why the cycle characteristics of the negative electrode material deteriorate is determined to be that, when the second silicon particles and the first silicon particles are mixed to obtain a precursor and then spray-dried, the second silicon particles are not properly assembled within the precursor.

### Conductive Material

Although the conductive material is not necessarily added, an embodiment of the present disclosure may further include the conductive material so as to secure the conductive path with the first silicon particles and improve the reversibility of lithium ions, thereby increasing the capacity and efficiency of the negative electrode material.

For the above purpose, one example of the present disclosure may include the conductive material in an amount of 10 wt% or more based on the total weight of the negative electrode material of a lithium secondary battery. More specifically, the conductive material may be included in an amount of 20 wt% or more based on the total weight of the negative electrode material. However, since capturing by the carbon coating layer may become difficult when the amount becomes excessive, an embodiment of the present disclosure may set the weight ratio of the conductive material to 30 wt% or less based on the total weight of the negative electrode material.

More specifically, one example of the conductive material may be at least one of natural graphite and artificial graphite.

Hereinafter, the negative electrode material of a lithium secondary battery according to an embodiment of the present disclosure, including all or part of the above-described components, will be described.

The negative electrode material of a lithium secondary battery may have the median particle size D50 of 8.0 µm or more and 15.0 µm or less.

Specifically, the negative electrode material of a lithium secondary battery, which is an example of the present disclosure, may ensure uniform thickness quality of the electrode plate by setting the median particle size D50 to 8.0 µm or more. More specifically, the median particle size of the negative electrode material may be 9.0 µm or more or 10.0 µm or more. On the other hand, when the median particle size exceeds 15.0 µm and becomes excessively large, a problem may arise in the uniform thickness quality of the electrode plate, which may lead to variation in battery performance depending on location. Therefore, an embodiment of the present disclosure may set the upper limit to 15.0 µm. More specifically, the median particle size of the negative electrode material may be 12.0 µm or less.

In addition, the silicon content of the negative electrode material of a lithium secondary battery according to an embodiment of the present disclosure may be 30 wt% or more and 70 wt% or less.

The negative electrode material of a lithium secondary battery according to an embodiment of the present disclosure may secure the high capacity characteristics of the negative electrode material by including 30 wt% or more of the silicon. More specifically, the silicon content may be 40 wt% or more. On the other hand, when silicon is excessively included in the negative electrode material, the silicon particles and the conductive material cannot be completely surrounded by the carbon coating layer, either individually or as an integrated structure, which may result in the collapse of the structure of the negative electrode material, which is a silicon-carbon composite. For this reason, an embodiment of the present disclosure may include the silicon at 70 wt% or less based on the total weight of the negative electrode material of a lithium secondary battery. More specifically, the silicon content may be 60 wt% or less.

As described above, the negative electrode material of a lithium secondary battery according to the present disclosure may include the nano-sized first silicon particles and the micro-sized second silicon particles surrounded by the carbon coating layer, thereby securing high capacity characteristics and excellent lifespan characteristics.

Specifically, the negative electrode material according to an embodiment of the present disclosure may have a discharge capacity of 1250 mAh/g or more, an initial efficiency of 84.0% or more, and a 50-cycle life of 60.0% or more. In another embodiment, the discharge capacity may be 1500 mAh/g or more, the initial efficiency may be 87.0% or more, and the 50-cycle life may be 65.0% or more.

A manufacturing method for a negative electrode material of a lithium secondary battery according to the present disclosure will be described below. However, the following manufacturing method for a negative electrode material of a lithium secondary battery is merely an example, and it should be noted that the negative electrode material of a lithium secondary battery according to the present disclosure is not necessarily manufactured by this method. Any manufacturing method that satisfies the claims of the present disclosure may be used to implement each embodiment of the present disclosure without any problem.

According to an embodiment of the present disclosure, the manufacturing method for a negative electrode material of a lithium secondary battery includes preparing first silicon particles with a particle size of less than 1.00 µm and second silicon particles with a particle size of 1.00 µm or more; mixing the first silicon particles, the second silicon particles, and pitch to obtain a precursor; press molding the precursor; carbonizing the precursor after the press molding to obtain a molded body; and grinding and classifying the molded body, in which a D90 particle size of the second silicon particles is 5.00 µm or more and 15.0 µm or less.

Each operation will be described in detail below.

### Operation of preparing first silicon particles and second silicon particles

According to an embodiment of the present disclosure, the first silicon particles with a particle size of less than 1.00 µm and the second silicon particles with a particle size of 1.00 µm or more may be prepared first. In this case, as described above, the D90 particle size of the second silicon particles may be 5.00 µm or more and 15.0 µm or less.

To obtain the first silicon with a particle size of less than 1.00 µm, a non-limiting embodiment of the present disclosure may grind the silicon raw material through the mechanical milling.

As an example, the mechanical milling may be performed using the stabilized zirconia. In addition, in order to improve nano-sizing efficiency, suppress the generation of fine particles, and prevent oxidation of silicon particles, the size of the zirconia beads may be less than twice the D99 of the silicon raw material to be fed; however, since the zirconia beads used may be applied in various sizes depending on process design, the present disclosure is not limited thereto.

Other detailed conditions for mechanical milling are matters that a person skilled in the art may sufficiently design according to the purpose, and therefore, are not limited thereto. However, as an example, a ball per ratio (BPR) of the silicon raw material to the stabilized zirconia ball may be set to 5:1, and the rotational speed of the internal rotor of the grinder may be maintained at 2500 rpm.

Furthermore, according to one example of the present disclosure, the solvent in the mechanical milling may be an organic solvent such as ethanol or IPA to prevent the oxidation of the silicon raw material.

Meanwhile, regarding the second silicon particles, the relative particle size ratio derived by the following Equation 1 may be 0.20 or more and 0.99 or less. Since this has been described above with respect to the negative electrode material of the present disclosure, detailed description thereof will be omitted. 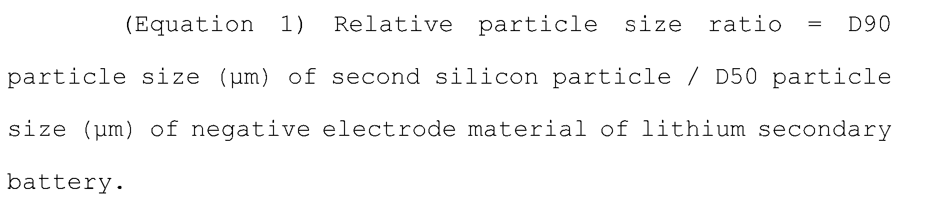 Relative particle size ratio = D90 particle size (µm) of second silicon particle / D50 particle size (µm) of negative electrode material of lithium secondary battery. (Equation 1)

### Operation of obtaining precursor by mixing

After preparing the first silicon particles and the second silicon particles, they may be mixed with pitch to obtain the negative electrode material precursor.

The mixing of the first silicon particles, the second silicon particles, and the pitch described above may be performed simultaneously; however, it is also possible that at least two of the three are mixed first, and then the remaining one is mixed.

According to an embodiment of the present disclosure, when the first silicon particles and the second silicon particles are mixed first and then the pitch is added, the mixture of the first silicon particles and the second silicon particles may be spray-dried to remove the solvent, and the pitch may be added to the spray-dried product obtained therefrom, followed by mixing to obtain the precursor.

As described above regarding the negative electrode material, as a non-limiting example, the weight ratio of the second silicon particles added in the mixture may be 10 wt% or more and 80 wt% or less based on the total weight of the first silicon particles and the second silicon particles.

In addition, the mixing may be performed through the milling process via the contact medium with the powder, and as a non-limiting example, it may be performed via mechano fusion or a ball mill. When performing a milling process via a contact medium with the powder in this manner, there is an advantage in that the independent flow of the first silicon particles may be reduced when mixed with the solvent.

Furthermore, according to another embodiment of the present disclosure, the conductive material may be additionally mixed to improve the conductivity of the negative electrode material, and as described above, the conductive material may be at least one of natural graphite and artificial graphite.

In addition, as a non-limiting example, the median particle size D50 of the conductive material may be smaller than the median particle size of the precursor so that the conductive material may be completely captured within the precursor, and as a non-limiting example of the present disclosure, the median particle size of the conductive material may be 8 µm to 10 µm.

### Operation of press molding precursor

According to one example of the present disclosure, a specific pressure may be applied to the precursor within a defined time range to minimize pores present inside the precursor. Specifically, when the press molding is performed in this manner, the pitch may fill the micropores inside the precursor, thereby reducing the specific surface area of the negative electrode material and improving the electrochemical properties. As a non-limiting example, the press molding may be performed by filling the precursor powder into a self-made mold and using a pressure press equipment, and the semi-finished product obtained thus may be defined in the form of a block.

### Operation of carbonizing precursor to obtain molded body

The present disclosure carbonizes the precursor at 800°C or higher to not only evaporate volatile components present inside the precursor but also solidify the pitch to secure the internal structure of the negative electrode material. In addition, when the temperature becomes too high during the carbonization, the capacity and efficiency may be reduced due to the generation of silicon carbide and silicon nitride that do not possess the electrochemical performance, so the carbonization may be performed in a temperature range of 1000°C or lower. In particular, the carbonization may be performed in an inert atmosphere to suppress the oxidation of silicon particles.

### Operation of grinding and classifying molded body

According to the manufacturing method for a negative electrode material of a lithium secondary battery according to an embodiment of the present disclosure, the molded body may be ground and classified. Through this, the negative electrode material of a desired size may be obtained. As a non-limiting example, the grinding may be performed by dry grinding, and the dry grinding may be performed using a jet mill or a pin mill.

### Operation of coating carbon on negative electrode material

As described above, after obtaining the negative electrode material by grinding and classifying, an embodiment of the present disclosure may further include a operation of carbon coating the surface of the negative electrode material.

The carbon coating operation may be performed by adding a carbon-based material to the silicon particles and performing heat treatment on the resulting mixture, and the carbon-based material may be at least one selected from the group consisting of petroleum-based pitch having a softening point of less than 250°C, coal tar, PAA, and PVA. In addition, although not limited thereto, the coating may be performed using a twisted blade mixer. In this case, process variables may include time and rotational speed; however, in view of the fact that these are matters that can be appropriately designed by a person skilled in the art according to the intended purpose, they will not be specifically described in the present disclosure.

Meanwhile, according to a manufacturing method for a negative electrode material of a lithium secondary battery according to another embodiment of the present disclosure, an operation of carbon coating the surface of the first silicon particles before the above-described mixing may be included.

More specifically, the manufacturing method for a negative electrode material may include: preparing first silicon particles with a particle size of less than 1.00 µm; carbon coating the first silicon particles; obtaining a mixture by adding second silicon particles with a particle size of 1.00 µm or more and a carbon-based material to the first silicon particles after carbon coating and mixing; obtaining a molded body by heat treating the mixture after mixing; and grinding and classifying the molded body.

In this case, the carbon coating operation may be performed by adding pitch to the first silicon particles and then carbonizing the resulting mixture. The carbon-based material may be at least one of petroleum-based pitch, coal tar, PAA, and PVA, which have a softening point of less than 250°C as described above.

In this manner, when carbon coating is directly performed on the first silicon particles before mixing, unlike a case in which a carbon precursor such as pitch is indirectly coated as described above, conductivity in the primary particle state is preferentially secured, and thus capacity and efficiency characteristics of the entire negative electrode material are further improved.

Furthermore, if any of the details described for each operation in the present specification are easily adopted by a person skilled in the art, such details are equally applicable to a case in which carbon coating is directly performed on the first silicon particles and then the second silicon particles and the pitch are mixed according to other embodiments of the present disclosure.

For example, the weight ratio of the second silicon particles may be 10 wt% or more and 80 wt% or less based on the total weight of the first silicon particles and the second silicon particles. In addition, the conductive material may be additionally mixed during the mixing, and the conductive material may be at least one of natural graphite and artificial graphite Furthermore, when preparing the first silicon, the silicon raw material may be ground through the mechanical milling, and the solvent in the mechanical milling may be ethanol or IPA. Additionally, the mixing may be performed through a milling process involving contact with powder, and the manufacturing method for a negative electrode material may additionally include an operation of carbon coating the surface of the manufactured negative electrode material.

The manufacturing method for a negative electrode of a lithium secondary battery according to the present disclosure will be described in detail below.

The negative electrode may be manufactured by mixing a negative electrode material manufactured according to an embodiment of the present disclosure, a binder, and optionally a conductive material to form a composition for forming a negative electrode material layer, and applying the composition to a negative electrode current collector.

The negative electrode current collector may be, for example, a copper foil, a nickel foil, stainless steel, a titanium foil, a nickel foam, a copper foam, a polymer substrate coated with a conductive metal, or a combination thereof.

As the binder, polyacrylic acid, polyvinyl alcohol, carboxymethylcellulose/styrene-butadiene rubber, hydroxypropylene cellulose, diacetylene cellulose, polyvinyl chloride, polyvinylpyrrolidone, polytetrafluoroethylene, polyvinylidene fluoride, polyethylene, polypropylene, etc., may be used, but is not limited thereto. The binder may be mixed in an amount of 1 wt% to 30 wt% based on the total amount of the composition for forming the negative electrode material layer.

The conductive material is not particularly limited as long as it is conductive without causing chemical changes in the battery. Specifically, graphite such as natural graphite or artificial graphite; carbon black such as acetylene black, ketjen black, channel black, furnace black, lamp black, or thermal black; conductive fibers such as carbon fibers or metal fibers; metal powder particles such as carbon fluoride, aluminum, or nickel powder; conductive whiskey such as zinc oxide or potassium titanate; conductive metal oxides such as titanium oxide; or conductive materials such as polyphenylene derivatives may be used. The conductive material may be mixed in an amount of 0.1 wt% to 30 wt% based on the total amount of the composition for forming the negative electrode material layer.

### Mode for Invention

### (Example)

### (1) Manufacturing of negative electrode material

First, a silicon raw material (Poly-Si) with a full width at half maximum of the particle size distribution of 0.2° or more was prepared. Next, the silicon raw material was ground using stabilized zirconia of 0.1 mm size, thereby obtaining a slurry of first silicon particles with a particle size of less than 1.00 µm and a D90 particle size of 200 nm. In addition, the grinding was performed in an ethanol solvent with 99% purity, and the solid content ratio was 10%. Furthermore, during the grinding, the BPR of the stabilized zirconia was 5:1, and the rotational speed of the rotor inside the grinder was maintained at 2500 rpm. Next, flake-like graphite having a median particle size (D50) of 8.00 µm and second silicon particles having a particle size of 1.00 µm or more and a full width at half maximum (FWHM) of the particle size distribution of less than 0.2° were added to the slurry of the first silicon particles obtained by the process described above. In this case, the weight ratio of the added first silicon particles and the second silicon particles based on the total weight of the negative electrode material is shown in Table 1 below. In addition, along with the weight ratio, the D90 particle size of the second silicon particles is also shown in Table 1. Then, this was spray-dried and thus obtained in a powder state. Subsequently, petroleum-based pitch was added, and mixing using mechano fusion was performed to prepare a negative electrode material precursor. The pitch had a fixed carbon ratio of 70% or more and a beta-resin value of 25%. Thereafter, the precursor was press molded to obtain a block-shaped semi-finished product. Next, the semi-finished product was carbonized at a temperature of 900°C in an inert atmosphere. Subsequently, after undergoing a grinding process in a JET mill, an additional coating was performed by evenly dispersing carbon raw materials, such as petroleum-based pitch or coal tar, PAA, or PVA, with a softening point of less than 250°C, onto the surface of the ground particles. In this case, the additional coating was performed using a twisted blade mixer. Subsequently, the negative electrode material was obtained by heat treatment at 900°C under an inert atmosphere, followed by sieving.

### (2) Manufacturing of negative electrode

A negative electrode active material slurry was prepared by mixing 75 wt% of manufactured negative electrode material, 24 wt% of binder containing polyacrylic acid (PAA), and 1 wt% of Super P conductive material in a distilled water solvent.

The negative electrode active material slurry was coated onto a copper (Cu) current collector, dried, and then compressed in a roll press to a rolling density of 1.0 g/cc. Subsequently, the negative electrode was prepared by vacuum drying in a vacuum oven.

### (3) Electrochemical evaluation

A lithium secondary battery was prepared to evaluate electrochemical characteristics. Specifically, a half coin cell of a 2032 coin cell type was manufactured according to the conventional manufacturing method using the negative electrode manufactured by the above method, a lithium metal (Li-metal) counter electrode, and an electrolyte prepared by dissolving 1 mol of LiPF₆ solution in a mixed solvent with a volume ratio of ethylene carbonate (EC) to ethyl methyl carbonate (EMC) of 3:7. 10 wt% of FEC additive was added to the electrolyte solution.

The discharge capacity, initial efficiency, and 50-cycle life of the above cell were measured and shown in Table 2 below.

The charging and discharging current was measured at 0.1C during the initial cycle. Additionally, the 50-cycle life was measured by applying a current of 0.5C during the charging and discharging based on the first 1C capacity. In this case, a charge cut-off current was set to 0.005C.

**[Table 1]**

| Division | Second silicon particle | | First silicon particle (wt%) | Weight ratio (wt%) of second silicon particles to total silicon particles | Median particle size of negative electrode material (µm) | Relative partic le size ratio |
|---|---|---|---|---|---|---|
| | wt% | D90 particle size (µm) | | | | |
| Compar ative Exampl e 1 | 0 | 5.0 | 50 | 0 | 10.5 | - |
| Invent ive Exampl e 1 | 15 | 5.0 | 30 | 33.3 | 10.2 | 0.49 |
| Invent ive Exampl e 2 | 25 | 5.0 | 20 | 55.5 | 9.9 | 0.51 |
| Invent ive Exampl e 3 | 35 | 5.0 | 10 | 77.7 | 10.8 | 0.46 |
| Compar ative Exampl e 2 | 50 | 5.0 | 0 | 100 | 10.9 | 0.46 |
| Compar ative Exampl e 3 | 0 | 9.0 | 50 | 0 | 10.5 | - |
| Invent ive Exampl e 4 | 15 | 9.0 | 30 | 33.3 | 10.8 | 0.93 |
| Invent ive Exampl e 5 | 25 | 9.0 | 20 | 55.5 | 11.2 | 0.89 |
| Invent ive Exampl e 6 | 35 | 9.0 | 10 | 77.7 | 12.5 | 0.80 |
| Compar ative Exampl e 4 | 50 | 9.0 | 0 | 100 | 12.8 | 0.78 |
| Compar ative Exampl e 5 | 0 | 13.0 | 50 | 0 | 10.5 | - |
| Compar ative Exampl e 6 | 15 | 13.0 | 30 | 33.3 | 11.2 | 1.34 |
| Compar ative Exampl e 7 | 25 | 13.0 | 20 | 55.5 | 12.3 | 1.22 |
| Compar ative Exampl e 8 | 50 | 13.0 | 0 | 100 | 16.8 | 0.89 |

**[Table 2]**

| Division | Discharge capacity (mAh/g) | Initial efficiency (%) | Lifespan (%@50cycle) |
|---|---|---|---|
| Comparative Example 1 | 1213 | 83.5 | 78.5 |
| Inventive Example 1 | 1295 | 84.5 | 75.8 |
| Inventive Example 2 | 1588 | 85.6 | 76.4 |
| Inventive Example 3 | 1692 | 87.6 | 68.5 |
| Comparative Example 2 | 1742 | 87.8 | 39.8 |
| Comparative Example 3 | 1213 | 83.5 | 78.5 |
| Inventive Example 4 | 1416 | 86.5 | 75.3 |
| Inventive Example 5 | 1745 | 87.5 | 75.4 |
| Inventive Example 6 | 1785 | 88.4 | 69.4 |
| Comparative Example 4 | 1852 | 89.2 | 35.6 |
| Comparative Example 5 | 1213 | 83.5 | 78.5 |
| Comparative Example 6 | 1525 | 86.5 | 54.5 |
| Comparative Example 7 | 1714 | 87.2 | 48.5 |
| Comparative Example 8 | 1980 | 89.2 | 18.9 |

The electrode including the negative electrode materials of Comparative Examples 1, 3, and 5, in which the weight ratio of the second silicon particles is less than 10 wt% based on the total weight of the first silicon particles and the second silicon particles, could not secure the high capacity characteristics.

In addition, Comparative Examples 2, 4, and 8, in which the weight ratio of the second silicon particles exceeds 80 wt%, showed poor 50-cycle life.

In Comparative Examples 5 to 7, in which the relative particle size ratio fell outside the range proposed in the present disclosure, the D90 of the second silicon particles was excessively large compared to the median particle size of the negative electrode material, such that the structure of the negative electrode material collapsed and the excellent electrochemical characteristics could not be secured.

On the other hand, Inventive Examples 1 to 6, which satisfy all the conditions proposed in the present disclosure, exhibited excellent discharge capacity, initial efficiency, and 50-cycle characteristics. FIG. 1 is a diagram schematically illustrating the negative electrode material of a lithium secondary battery obtained by the manufacturing method described above. Referring to the drawing, it may be seen that the negative electrode material includes the conductive material (3) along with the first silicon particles (1) and the second silicon particles (2) within the carbon coating layer (4).

## Claims

1. A negative electrode material of a lithium secondary battery, comprising:
first silicon particles with a particle size of less than 1.00 µm;
second silicon particles with a particle size of 1.00 µm or more; and
a carbon coating layer surrounding the first silicon particles,
wherein a D90 particle size of the second silicon particles is 5.00 µm or more and 15.0 µm or less, and
a relative particle size ratio derived by the following Equation 1 is 0.20 or more and 0.99 or less.
(Equation 1) Relative particle size ratio = D90 particle size (µm) of second silicon particle / D50 particle size (µm) of negative electrode material of lithium secondary battery.

2. The negative electrode material of claim 1, wherein the carbon coating layer is soft carbon.

3. The negative electrode material of claim 2, wherein the soft carbon is derived from at least one of coal-based pitch and petroleum-based pitch.

4. The negative electrode material of claim 3, wherein the coal-based pitch has a fixed carbon ratio of 60% or more and a beta-resin value (β-resin value) of 10% or more.

5. The negative electrode material of claim 1, wherein the D90 particle size of the first silicon particles is 30 nm or more and 500 nm or less.

6. The negative electrode material of claim 1, wherein a weight ratio of the second silicon particle is 10 wt% or more and 80 wt% or less based on a total weight of the first silicon particles and the second silicon particles.

7. The negative electrode material of claim 1, wherein a full width at half maximum of a particle size distribution of the first silicon particle is 0.2 or more.

8. The negative electrode material of claim 1, further comprising:
a conductive material.

9. The negative electrode material of claim 8, wherein the conductive material is at least one of natural graphite and artificial graphite.

10. The negative electrode material of claim 1, wherein a median particle size D50 is 8.0 µm or more and 15.0 µm or less.

11. A manufacturing method for a negative electrode material of a lithium secondary battery, comprising:
preparing first silicon particles with a particle size of less than 1.00 µm and second silicon particles with a particle size of 1.00 µm or more;
mixing the first silicon particles, the second silicon particles, and pitch to obtain a precursor;
press molding the precursor;
carbonizing the precursor after the press molding to obtain a molded body; and
grinding and classifying the molded body,
wherein a D90 particle size of the second silicon particles is 5.00 µm or more and 15.0 µm or less.

12. A manufacturing method for a negative electrode material of a lithium secondary battery, comprising:
preparing first silicon particles with a particle size of less than 1.00 µm;
carbon coating the first silicon particles;
after carbon coating, adding second silicon particles with a particle size of 1.00 µm or more and a carbon-based material to the first silicon particles, followed by mixing to obtain a mixture;
after the mixing, heat treating the mixture to obtain a molded body; and
grinding and classifying the molded body,
wherein a D90 particle size of the second silicon particles is 5.00 µm or more and 15.0 µm or less.

13. The manufacturing method of claim 12, wherein the carbon-based material is at least one of petroleum-based pitch, coal tar, PAA, and PVA, with a softening point of less than 250°C.

14. The manufacturing method of claim 11 or 12, wherein a weight ratio of the second silicon particle is 10 wt% or more and 80 wt% with respect to a total weight of the first silicon particles and the second silicon particles.

15. The manufacturing method of claim 11 or 12, wherein a conductive material is additionally mixed during the mixing.

16. The manufacturing method of claim 15, wherein the conductive material is at least one of natural graphite and artificial graphite.

17. The manufacturing method of claim 11 or 12, further comprising:
when preparing the first silicon particles, obtaining first silicon by grinding a silicon raw material through mechanical milling.

18. The manufacturing method of claim 17, wherein a solvent in the mechanical milling is ethanol or IPA.

19. The manufacturing method of claim 11 or 12, wherein the mixing is performed through a milling process via a contact medium with powder.

20. The manufacturing method of claim 11 or 12, further comprising:
carbon coating a surface of the manufactured negative electrode material.
